# FASCICULE DE BREVET EUROPEEN

(11) **EP 3 329 738 B1**
(45) Date de publication et mention de la délivrance du brevet: **15.01.2020**
(21) Numéro de dépôt: 16748284.3
(22) Date de dépôt: 29.07.2016
(51) Int. Cl.: H05B 3/48, B60S 1/48, H05B 3/56, H05B 1/02

(54) **DISPOSITIF DE CHAUFFE D'UN SYSTÈME DISTRIBUTION DE LIQUIDE LAVE-GLACE DE VÉHICULE AUTOMOBILE, RACCORD HYDRAULIQUE COMPORTANT UN TEL DISPOSITIF ET PROCÉDÉ D'ASSEMBLAGE ASSOCIÉ**
VORRICHTUNG ZUM BEHEIZEN EINES SYSTEMS ZUR VERTEILUNG VON SCHEIBENWASCHFLÜSSIGKEIT EINES KRAFTFAHRZEUGS, HYDRAULISCHE KUPPLUNG MIT SOLCH EINER VORRICHTUNG UND ZUGEHÖRIGES MONTAGEVERFAHREN
DEVICE FOR HEATING A SYSTEM FOR DISTRIBUTING WINDSCREEN-WASHER LIQUID OF A MOTOR VEHICLE, HYDRAULIC COUPLING INCLUDING SUCH A DEVICE AND ASSOCIATED ASSEMBLY METHOD

(30) Priorité: 29.07.2015 FR 1557238
(43) Date de publication de la demande: 06.06.2018
(73) Titulaire: Valeo Systèmes d'Essuyage, 78320 Le Mesnil-Saint-Denis (FR)
(72) Inventeur: BAYARD, Geoffrey, 63800 Cournon (FR); BERTHON, Nadia, 63570 Auzat-la-Combelle (FR)
(74) Mandataire: Valeo Systèmes d'Essuyage
(86) Numéro de dépôt international: PCT/EP2016/068133
(87) Numéro de publication internationale: WO 2017/017247

(56) Documents cités:
- EP-A1- 2 777 996
- WO-A1-2009/014589
- WO-A1-2010/025957
- WO-A1-2014/095945
- FR-A1- 2 965 234
- FR-A1- 2 965 235

## Description

La présente invention est relative à un dispositif de chauffe d'un système de distribution de liquide lave-glace de véhicule automobile dans lequel le liquide lave-glace est réchauffé/dégelé avant d'être projeté. De façon non limitative, le liquide lave-glace est par exemple projeté sur une surface vitrée du véhicule automobile. L'invention s'applique plus particulièrement au contrôle de la température de conducteurs chauffants du dispositif de chauffe.

La présente invention concerne également un raccord hydraulique comportant un tel dispositif de chauffe. Les véhicules automobiles sont couramment équipés de système d'essuyage de surface vitrée servant à assurer au conducteur une vision dégagée de son environnement, en particulier en cas d'intempéries. Un tel système comprend généralement un ou deux balais d'essuie-glace qui raclent la surface extérieure de la surface vitrée de manière à évacuer en dehors du champ de vision du conducteur l'eau et/ou la neige présente sur cette surface.

Il est également connu d'équiper les véhicules d'un système de lavage agencé pour projeter un liquide de lavage sur une surface vitrée, de manière à faciliter la dissolution des salissures, et ainsi augmenter la qualité du nettoyage de ce pare-brise en particulier sous l'action du système d'essuyage. Dans une version de système de lavage, celui-ci comporte des gicleurs situées sur le véhicule. Dans une autre version, chaque balai d'essuie-glace comporte par exemple une rampe d'arrosage pourvue d'un ou d'une multitude de gicleurs ou orifices d'arrosage sous pression, permettant la distribution du liquide lave-glace sur la surface vitrée.

L'invention concerne plus généralement tout système de lavage agencé pour être monté sur un véhicule et projeter un liquide de lavage sur une surface dudit véhicule,
Les gicleurs sont alimentés en liquide lave-glace contenu dans un réservoir par l'intermédiaire d'une pompe.

Les gicleurs peuvent être situés sur une ou des rampes d'arrosage de balais d'essuie-glace ou sur un support fixé sur la structure du véhicule à proximité de la surface à nettoyer.

Lorsque la température du liquide lave-glace est trop basse, par exemple en dessous de 5°C, on réchauffe/dégèle le liquide lave-glace. Pour cela, une conduite de transport réchauffe le liquide lave-glace prélevé dans le réservoir par la pompe vers le(s) gicleur(s) par exemple au moment ou l'on actionne la commande du lave-glace. Dans l'exemple d'un système d'essuie glace la mise en œuvre se fait généralement par le levier de commande placé à côté du volant et contrôlant entre autre l'actionnement des essuie-glaces.

Pour réaliser le réchauffage proprement dit du liquide lave-glace, on utilise un réseau de conduites de réchauffe et de transport, chaque conduite de réchauffe comportant un manchon, en particulier extrudé, de canaux de circulation et dans lequel des conducteurs chauffants sont noyés dans la masse. Les conducteurs chauffants chauffent les conduites de réchauffage et de transport qui à leur tour réchauffent le liquide lave-glace.

Les conducteurs chauffants peuvent être utilisés sur de larges plages de températures ambiantes, allant par exemple de -40°C, quand le véhicule est à l'arrêt dans un froid sibérien, à +130°C, quand le véhicule roule et que la température extérieure du véhicule est de +5°C.

Pour évaluer la température des conducteurs chauffants, on prend en compte une température de chauffe due à l'échauffement des conducteurs chauffants en fonctionnement à la température ambiante. Actuellement, les conducteurs chauffants dégagent la même chaleur quelle que soit la température extérieure. Quand la température ambiante est élevée, la température des conducteurs chauffants en fonctionnement aussi est élevée. Si la température des conducteurs chauffants dépasse un seuil de tolérance associé au matériau dont ils sont fabriqués, alors ils risquent de fondre et/ou de provoquer un départ de feu.

Le document "WO 2014/095945 A1" divulgue un raccord hydraulique de système de distribution de liquide lave-glace selon le préambule de la revendication 1.

Un des buts de la présente invention est de pallier à ces inconvénients en proposant un dispositif de chauffe de système distribution de liquide lave-glacede véhicule automobile. Ce dispositif de chauffe amélioré, permet un contrôle efficace et simple de la température des conducteurs chauffants, et permet en plus de réchauffer le raccord hydraulique du dispositif de chauffe.

Par liquide de lavage on entend dans le cadre de la présente invention tout liquide de type lave glace adapté au nettoyage d'une surface vitrée de véhicule, en particulier le nettoyage associé à l'utilisation de balai d'essuie-glace.

A cet effet, la présente invention a pour objet un dispositif de chauffe d'un système de distribution de liquide lave-glace de véhicule automobile, ledit dispositif de chauffe comprenant :
- au moins deux conducteurs chauffants,
caractérisé en ce qu'il comprend en outre un régulateur de courant contrôlant le courant circulant dans les conducteurs chauffants en fonction de la température desdits au moins deux conducteurs chauffants.

Un tel dispositif permet d'augmenter la robustesse des conducteurs chauffants 23, 25 vis-à-vis de la température, et d'autre part vis-à-vis du courant d'alimentation des conducteurs chauffants.

Selon une ou plusieurs caractéristiques du dispositif de chauffe, prise seule ou en combinaison :
- le régulateur du courant est connecté en série aux conducteurs chauffants de façon à fermer un circuit électrique de chauffe.
- le régulateur du courant comprend un interrupteur apte à ouvrir le circuit électrique de chauffe lorsque les conducteurs chauffants atteignent une température seuil.
- le régulateur du courant comprend un thermostat bilame.
- le régulateur du courant comprend un stabilisateur de courant dont la résistance augmente avec la température des conducteurs chauffants.
- le régulateur du courant comprend une thermistance à coefficient de température positif.
- le dispositif de chauffe comporte une boucle de contrôle fermée dans laquelle le régulateur de courant contrôle la température des conducteurs chauffants en fonction d'une température mesurée des conducteurs chauffants et d'une valeur seuil.
- le régulateur du courant est fixé dans un raccord hydraulique du système de distribution de liquide lave-glace.
- le régulateur du courant est encapsulé dans une colle thermique favorisant la dissipation de sa chaleur.

Selon un autre aspect, l'invention a pour objet un système de distribution de liquide lave-glace de véhicule automobile, comportant un dispositif de chauffe tel que décrit précédemment.

L' invention a pour objet un raccord hydraulique de système de distribution de liquide lave-glace selon la revendication 1.

L'invention a aussi pour objet un procédé d'assemblage du raccord hydraulique, caractérisée en ce qu'il comprend les étapes suivantes :
- on insère les conducteurs chauffants dans des gorges de passage du raccord hydraulique,
- on place le régulateur du courant dans un logement du raccord hydraulique,
- on coule la colle thermique dans le logement de façon à encapsuler régulateur du courant.

D'autres caractéristiques et avantages de l'invention ressortiront de la description suivante, donnée à titre d'exemple, sans caractère limitatif, en regard des dessins annexés sur lesquels :
- La figure 1 représente une vue schématique d'éléments d'un système de distribution de liquide lave-glace de véhicule automobile,
- la figure 2 représente une vue en coupe d'une conduite de réchauffe principale du système de distribution de la figure 1 ainsi que des éléments d'un dispositif de chauffe,
- la figure 3 représente une vue schématique d'un régulateur de courant assemblé à la conduite de réchauffe principale,
- la figure 4 représente une boucle de contrôle permettant la régulation d'une température des conducteurs chauffants,
- la figure 5 représente un graphique montrant la variation de température de conducteurs chauffants du dispositif de chauffe à différentes tensions d'alimentation,
- la figure 6 représente une vue schématique du régulateur de courant fixé dans un logement d'un raccord hydraulique du système de distribution,
- la figure 7 représente une vue schématique du logement rempli de colle thermique encapsulant le régulateur de courant,
- la figure 8 représente une vue schématique des transferts de chaleur prenant place dans le raccord hydraulique,
- la figure 9 représente un organigramme des différentes étapes du procédé d'assemblage du régulateur de courant,
- la figure 10 représente un graphique montrant la variation de résistance des conducteurs chauffants, d'une thermistance à coefficient de température positif et d'un assemblage de ces deux éléments.
- La figure 11 représente un graphique montrant la variation de résistance de la thermistance à coefficient de température positif en fonction de la température.

Sur ces figures, les éléments identiques portent les mêmes numéros de référence.

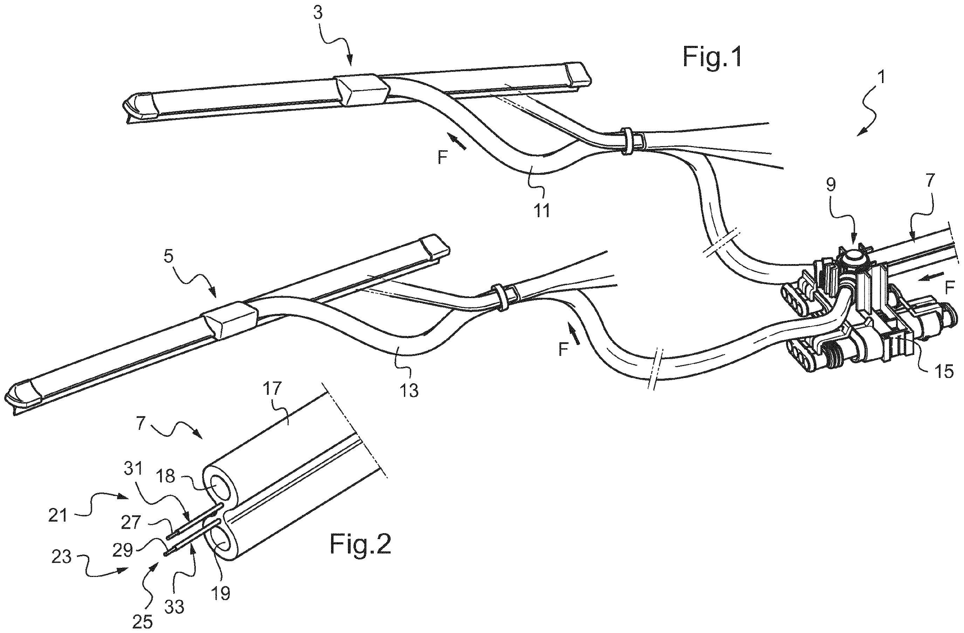

La figure 1 représente une vue schématique générale des éléments d'un système de distribution de liquide lave-glace 1 de véhicule automobile. L'exemple développé dans la description ci-dessus est un système pour balais d'essuie-glace 3, 5 à deux rampes d'arrosage. Bien sur, il est tout à fait possible de n'avoir qu'une seule rampe d'arrosage.

Dans l'exemple, les balais d'essuie-glace 3, 5 à deux rampes présentent une rampe d'arrosage de chaque côté du bras du balai d'essuie-glace (non représenté). Le liquide lave-glace est envoyé uniquement sur la partie avant du balai, c'est-à-dire que le liquide lave-glace est envoyé sur la rampe d'arrosage située du côté duquel le bras du balai d'essuie-glace avance pendant une phase montante du balayage et de l'autre côté pendant la phase descendante du balayage. Cet agencement permet d'essuyer instantanément le liquide lave-glace après son dépôt sur la surface vitrée, supprimant ainsi tout intervalle durant lequel la vision aurait pu être réduite.

Le système de distribution de liquide lave-glace 1 comporte une conduite de réchauffe principale 7 destinée à être raccordée à une pompe de liquide lave-glace du véhicule automobile (non représentée), elle-même raccordée à un réservoir (non représenté), et un raccord hydraulique 9 pour raccorder la conduite de réchauffe principale 7 à des conduites de réchauffe secondaires de balai d'essuie-glace 11 et 13 respectivement raccordées aux rampes d'arrosage des balais d'essuie-glace 3, 5 du véhicule automobile.

Dans un autre mode de réalisation non illustré les conduites de réchauffe secondaires 11 et 13 sont respectivement raccordées à deux gicleurs ou groupes de gicleurs du véhicule automobile fixés, directement ou via un support, sur la structure du véhicule à proximité de la surface à nettoyer.

La conduite de réchauffe principale 7 et le raccord hydraulique 9 sont par exemple disposés sous le capot du véhicule automobile, c'est-à-dire dans le compartiment moteur, tandis que les conduites secondaires 11, 13 sont disposées à l'extérieur, dans l'exemple intégrées dans les balais d'essuie-glace 3, 5. Le raccord hydraulique 9 est assemblé à un boîtier 15 du véhicule afin d'être maintenu fixé dans le véhicule.

Le raccord hydraulique 9 peut par exemple comprendre des clapets anti-retour. Les clapets anti-retour permettent le passage du liquide pompé dans le sens de circulation allant de la pompe vers le ou les gicleurs, vers la rampe dans l'exemple illustré (voir les flèches F sur la figure 1) et le blocage du retour du flux de liquide pompé dans l'autre sens, c'est-à-dire du ou des des gicleurs, dans l'exemple situés sur les balais, vers la pompe.

Les conduites de réchauffe secondaires 11, 13 sont notamment similaires à la conduite de réchauffe principale 7. Elles comportent chacune un manchon, de préférence extrudé, d'un canal de circulation et deux conducteurs chauffants noyés dans la masse du manchon (non représenté).

La puissance de chauffe est conditionnée par le diamètre des canaux de circulation.

Comme on peut le voir sur la vue en coupe de la conduite de réchauffe principale 7 en figure 2, ladite conduite comporte un manchon 17 extrudé de deux canaux de circulation 18, 19. En outre, un dispositif de chauffe 21 est placé partiellement dans le manchon 17. Le dispositif de chauffe 21 comprend deux conducteurs chauffants 23, 25 noyés dans la masse du manchon 17. Dans l'exemple de réalisation représenté en figure 2, la section du manchon 17 présente une forme générale en huit et les conducteurs chauffants 23, 25 sont alignés au centre entre les canaux de circulation 18, 19. Les conducteurs chauffants 23, 25 et les canaux de circulation 18, 19 sont longitudinalement sensiblement parallèles entre eux.

Le manchon 17 est de préférence en matériau souple, par exemple en caoutchouc. Les canaux de circulation 18, 19 du liquide lave-glace et les conducteurs chauffants 23, 25 sont par exemple obtenus par extrusion et les conducteurs chauffants 23, 25 sont introduits avec la matière de manchon extrudée.

Les conducteurs chauffants 23, 25 comportent par exemple un ou des fils conducteurs électriques 27, 29 enrobés d'une gaine électriquement isolante 31, 33, par exemple en plastique PVC. Les fils conducteurs électriques 27, 29 comprennent par exemple de un à plusieurs (quatre par exemple) brins de dimensions submillimètriques (par exemple 150 µm de diamètre). Ces brins comprennent par exemple un matériau résistif c'est-à-dire un matériau dégageant de la chaleur lorsqu'il est parcouru par un courant électrique. Ce matériau comprend par exemple un alliage cupronickel CuNi ou nichrome NiCr. Sous l'effet du courant électrique, les brins vont se réchauffer et transmettre leur chaleur à la gaine isolante qui à son tour réchauffe le manchon 17. Le manchon 17 réchauffe à son tour le liquide circulant dans les canaux 18, 19, de sorte que le liquide lave-glace prélevé dans le réservoir par la(s) pompe(s) vers la rampe d'arrosage respective sont réchauffés.

Hors du manchon 17, les conducteurs chauffants 23, 25 sont enrobés afin d'éviter la corrosion et les courts circuits. Cet enrobage (non représentée) est réalisée en matériau thermo rétractable contenant un agent polymère étanchéifiant, ou bien encore en résine.

Les conducteurs chauffants 23, 25 sont connectés à une alimentation de tension prédéfinie, par exemple une batterie, côté pompe.

Au cours d'une étape de dimensionnement thermique, on détermine des paramètres du dispositif de chauffe tels que la résistance linéique des conducteurs chauffants 23, 25, la tension d'alimentation du dispositif de chauffe 21 qui permettront de dégager la quantité de chaleur désirée, c'est-à-dire la puissance dégagée. A titre d'exemple, la puissance dégagée est de 55W/m, la tension d'alimentation est 13,5 V et la résistance linéique est comprise entre 0,6 /m et 5,2 /m. Une fois que le dispositif de chauffe 21 est assemblé dans le véhicule, ces paramètres ne sont plus facilement modifiables.

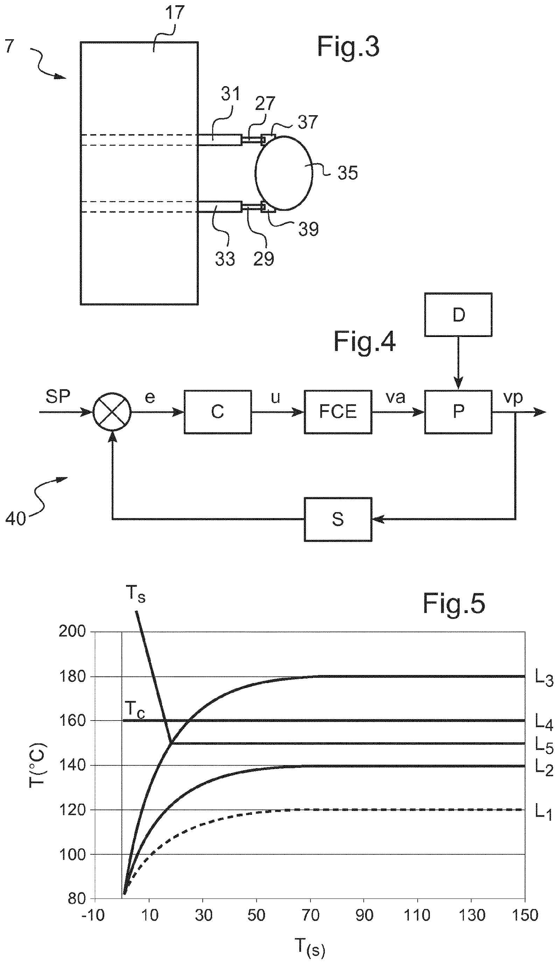

On note que la température des gaines et celle des conducteurs électriques sont approximativement égales, par exemple 10°C près. Par la suite, on se réfère à une température des conducteurs chauffants 23, 25. Les conducteurs chauffants 23, 25 en fonctionnement présentent une température T (voir figure 5) égale à une température ambiante, c'est-à-dire une température dans le voisinage immédiat, à laquelle s'additionne une température de chauffe due à la chaleur qu'ils dégagent.

Du côté raccord hydraulique 9, les conducteurs chauffants 23, 25 sont connectés en série à un régulateur de courant 35 (figure 3). A cet effet, le régulateur de courant 35 présente des cosses 37, 39 auxquelles les conducteurs électriques 27, 29 sont soudés ou sertis. Le régulateur de courant 35 ferme le circuit électrique du dispositif de chauffe. On évite ainsi l'utilisation d'éléments électriques supplémentaires comme des shunts.

Un régulateur de courant 35 permet de contrôler la température des conducteurs chauffants 23, 25.

Selon un premier mode de réalisation, le régulateur de courant 35 comprend un thermostat bilame calibré pour s'activer à une première température seuil *Tₛ₁* (voir figure 5) prédéterminée. Selon ce premier mode de réalisation, le thermostat bilame permet de mettre en place une boucle de contrôle fermée 40 de la température des conducteurs chauffants 23, 25. La figure 4 représente cette boucle de contrôle 40 de façon schématique.

Généralement, une boucle de contrôle fermée comprend un contrôleur *C,* cherchant à maintenir une variable *vp* d'un procédé *P* à une valeur consigne *SP* (pour « Set Point » en langue anglaise) prédéterminée. La valeur de la variable du procédé *vp* est mesurée par un capteur *S,* puis comparée à la valeur consigne *SP.* La différence entre ces deux valeurs est appelée erreur *e.* En fonction de cette erreur, le contrôleur *C* envoie une commande *u* à un élément de contrôle final *FCE* (pour « Final Control Element » en langue anglaise) qui va modifier une variable d'ajustement va. Cette variable d'ajustement *va* est introduite dans le procédé *P.* De plus, le procédé *P* est soumis à des perturbations *D* de l'environnement extérieur. La nouvelle valeur de la variable du procédé *vp* est mesurée par le capteur *S* et envoyée au contrôleur *C.*

Dans la boucle de contrôle de la température 40, le contrôleur *C* comprend le régulateur de courant 35. Le procédé *P* comprend l'échauffement des conducteurs chauffants 23, 25. La variable de procédé comprend la température *T* des conducteurs chauffants 23, 25.

Le thermostat bilame comprend par exemple deux plaques électriquement conductrices (non représentées) et présentant des coefficients de dilatation différents. Ainsi quand la température des conducteurs chauffants 23, 25 est inférieure à la température seuil *Tₛ*, les plaques sont en contact. Le circuit électrique est donc fermé, et le dispositif de chauffe 21 fonctionne. Quand la température augmente, les plaques se dilatent et se déforment différemment, s'éloignant ainsi l'une de l'autre. Ainsi, quand les conducteurs chauffants 23, 25 atteignent la première température seuil *Tₛ₁,* les plaques du bilame se séparent. Le circuit électrique est donc ouvert, et le dispositif de chauffe 21 ne fonctionne plus. Le thermostat bilame agit comme un interrupteur du circuit électrique, permettant d'interrompre la circulation du courant quand la température des conducteurs chauffants 23, 25 atteint la première température seuil *Tₛ₁.*

Dans la boucle de contrôle 40, le thermostat bilame est utilisé comme contrôleur *C* et comme capteur *S.* La variable de procédé *vp* comprend la température *T* des conducteurs chauffants. Cette valeur mesurée est soustraite à la valeur consigne *SP* qui comprend la première température seuil *Tₛ₁.* Si la différence, c'est-à-dire l'erreur *e,* entre ces deux valeurs est supérieure ou égale à zéro, alors les conducteurs chauffants 23, 25 risquent de dépasser des limites de températures d'utilisation des matériaux les composant, voire d'atteindre leur point de fusion. Dans ce cas, la commande *u* du thermostat bilame comprend l'ouverture du circuit électrique. L'élément de contrôle final *FCE* comprend par exemple les plaques du thermostat bilame. La variable d'ajustement *va* comprend la valeur du courant électrique, dans ce cas cette valeur est nulle. Les conducteurs chauffants 23, 25 ne sont plus alimentés et leur température *T* baisse.

Dans cette boucle de contrôle 40, les perturbations *D* comprennent la température ambiante qui varie selon la température extérieure au véhicule et selon que celui-ci est à l'arrêt ou en marche.

La figure 5 illustre la régulation en température des conducteurs chauffants 23, 25 à l'aide d'un graphique de variation de la température *T* (axe des ordonnées) des conducteurs chauffants 23, 25 au cours du temps *t* (axe des abscisses), pour différentes tensions d'alimentation.

Sur cette figure 5, une première courbe *L₁* représente la variation de la température *T* des conducteurs chauffants 23, 25 alimentés à une tension de 11V, une deuxième courbe *L₂* celle de conducteurs chauffants 23, 25 alimentés à une tension de 13,5V, une troisième courbe *L₃* de conducteurs chauffants 23, 25 alimentés à une tension de 15V. Dans ces trois premiers arrangements, le dispositif de chauffe 21 ne comprend pas de régulateur de courant 35 de type thermostat bilame.

La figure 5 montre aussi une quatrième courbe horizontale *L₄* représentant une température critique d'utilisation *T_{c}* des conducteurs chauffants 23, 25. Au-delà de cette température, les conducteurs chauffants 23, 25 peuvent être dégradés. A titre d'exemple, cette température critique *T_{c}* est 160°C.

Les première, deuxième et troisième courbes *L₁, L₂, L₃,* présentent le même profil : dans un premier temps, on observe une montée en température rapide. Cette montée en température correspond à la mise en fonctionnement du dispositif de chaleur 21 ou à la mise en route du véhicule. Puis la température se stabilise et tend vers une valeur constante. La température stabilisée des courbes dépend de la tension d'alimentation des conducteurs chauffants 23, 25. Plus la tension d'alimentation est élevée, et plus la puissance dégagée est élevée, et donc plus la température stabilisée est élevée. Selon cet exemple, les tensions d'alimentation de 11V, 13,5V et 15V résultent respectivement en des températures stabilisées de 120°C, 140°C et 180°C. La courbe *L₃* dépasse donc la température critique *T_{c}* des conducteurs chauffants 23, 25.

Enfin, la figure 5 montre une cinquième courbe *L₅* représentant la variation de la température de conducteurs chauffants 23, 25 alimentés à une tension de 15V quand le dispositif de chauffe 21 comprend un régulateur de courant 35 de type thermostat bilame. A titre d'exemple, on souhaite une température maximale de 150°C pour les conducteurs chauffants 23, 25. La du thermostat bilame est donc 150°C, c'est-à-dire légèrement inférieure à la température critique *T_{c}* ce qui permet d'intégrer une marge de sécurité en fonction des tolérances du thermostat bilame.

La cinquième courbe *L₅* présente au début une montée en température. Pendant cette montée, la température mesurée est inférieure à la température seuil *Tₛ*, la commande *u* comprend la fermeture du circuit électrique. Le courant électrique est non nul, les conducteurs chauffants 23, 25 sont alimentés et le dispositif de chauffe 21 peut fonctionner.

Puis, quand la température *T* des conducteurs chauffants 23, 25 atteint la première température seuil *Tₛ₁,* la commande *u* comprend l'ouverture du circuit électrique comme précédemment décrit. Le dispositif de chauffe 21 ne peut plus fonctionner.

Dès que la température *T* des conducteurs chauffants 23, 25 retombe en dessous de la première température seuil *Tₛ₁,* le circuit électrique se referme et le dispositif de chauffe 21 peut se remettre en route. Ainsi, la température des conducteurs chauffants 23, 25 est stabilisée à 150°C.

Grâce au thermostat bilame, la température des conducteurs chauffants 23, 25 reste donc inférieure à la température critique d'utilisation *T_{c}.*

Selon une variante le thermostat bilame présente plusieurs températures seuil. Par exemple, le thermostat bilame peut être configuré pour ouvrir le circuit électrique à 150°C et pour le refermer à 130°C.

Le thermostat bilame connecté aux conducteurs électriques 27, 29 contrôle donc le courant les traversant en fonction de la température des conducteurs chauffants en agissant comme un interrupteur.

Le régulateur thermique 35 selon le premier mode de réalisation permet donc d'augmenter la robustesse du dispositif de chauffe 21 de la température vis-à-vis des conducteurs chauffants 23, 25. De plus un thermostat bilame est un élément peu coûteux.

Le thermostat bilame peut être placé à l'intérieur du raccord hydraulique 9. Ainsi, la chaleur qu'il dégage permet de réchauffer le raccord hydraulique 9. Ceci permet d'éviter la présence de zones froides pouvant perturber la circulation du liquide lave-glace, voire l'empêcher, par exemple si le raccord hydraulique 9 est gelé.

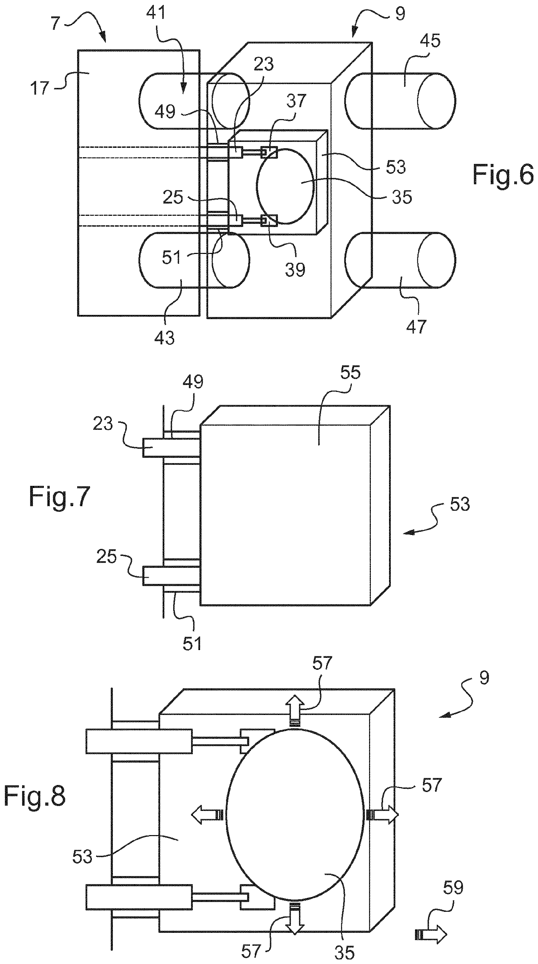

La figure 6 représente un thermostat bilame arrangé dans le raccord hydraulique 9. Pour faciliter la compréhension de la figure, certains éléments sont représentés en transparence.

Le raccord hydraulique 9 présente deux tubulures d'entrées 41, 43 raccordées aux canaux de circulation (non représentés) de la conduite de réchauffe principale 7, et deux tubulures de sorties 45, 47 raccordées aux canaux de circulation des conduites secondaires 11, 13 (non représentées sur cette figure). Le raccord hydraulique 9 présente en outre des gorges de passage 49, 51 permettant d'insérer les conducteurs chauffants 23, 25 à l'intérieur du raccord hydraulique 9.

Le thermostat bilame est placé dans un logement 53 présentant une taille de quelques centimètres carrés par exemple. En plus du thermostat bilame, le logement 53 accueille en outre les conducteurs chauffants 23, 25 ainsi que les cosses 37, 39.

Une colle thermique 55 (figure 7), c'est-à-dire diffusant la chaleur, encapsule le thermostat bilame. La colle thermique 55 améliore le tenue à la traction de la connexion des conducteurs chauffants 23, 25 avec les cosses 37, 39. Elle assure la cohésion mécanique du thermostat bilame avec les conducteurs chauffants 23, 25 et avec le logement 53. De plus, elle permet d'isoler le thermostat bilame ainsi que les conducteurs chauffants 23, 25 de l'humidité du raccord hydraulique 9, et ainsi les protéger des phénomènes d'électrolyse et de corrosion.

Le thermostat bilame transfère sa chaleur au logement 53, comme représenté par les flèches de transfert de chaleur 57 sur la figure 8. Puis, à son tour, le logement 53 transfère sa chaleur au raccord hydraulique 9, comme représenté par les flèches de transfert de chaleur 59. Le raccord hydraulique 9 est donc maintenu au chaud, ce qui permet au liquide lave-glace de circuler sans problème dans le système de distribution 1.

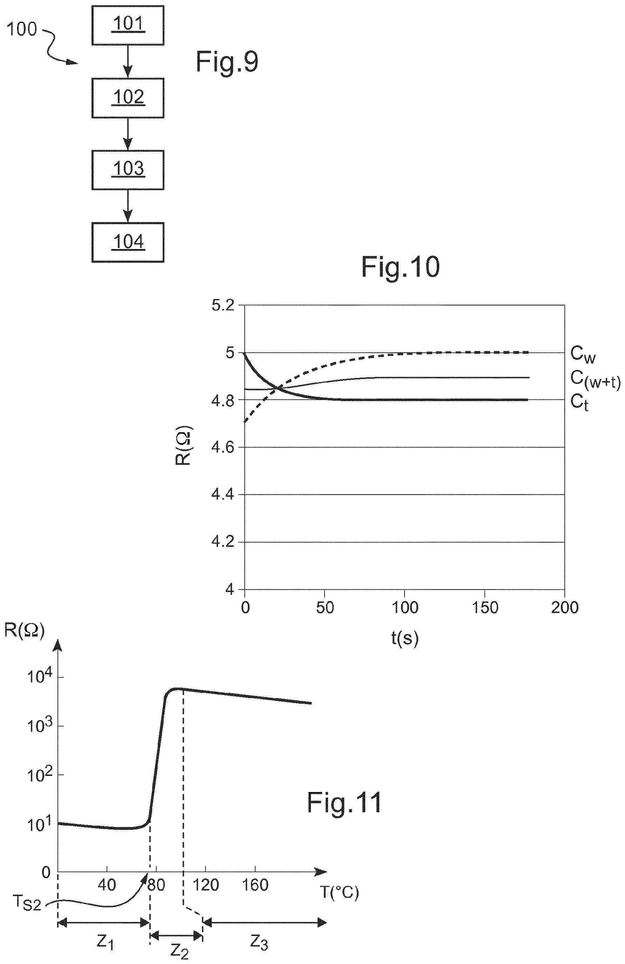

Au cours du procédé d'assemblage du dispositif de chauffe 21 selon un premier mode de réalisation 100 (figure 9), on réalise la succession d'étapes suivantes.

Dans une première étape 101, on insère les conducteurs chauffants 23, 25 dans les gorges de passage 49, 51 du raccord hydraulique 9.

Puis, dans une deuxième étape 102, on place le thermostat bilame dans le logement 53 du raccord hydraulique 9.

Dans une troisième étape 103, on soude ou on sertit les conducteurs électriques 27, 29 aux cosses 37, 39 du thermostat bilame.

Enfin, lors d'une quatrième étape 104, on coule une colle thermique 55 dans le logement 53 de façon à encapsuler le thermostat bilame.

Selon une variante, le thermostat bilame est fixé sur la conduite principale 7 grâce à du ruban adhésif (non représenté).

Selon un deuxième mode de réalisation le régulateur de courant 35 comprend une thermistance à coefficient de température positif (CTP) dont la variation de résistance permet de contrôler le courant circulant d'une part en le stabilisant et d'autre part en l'interrompant à une deuxième température seuil *Ts2* (figure 11). La thermistance CTP peut ainsi être utilisée comme fusible réarmable.

En effet, il a été observé expérimentalement que la résistance des conducteurs chauffants 23, 25 varie avec la température.

Ceci est illustré par la figure 10 qui représente la variation de la résistance *R* (axe des ordonnées) au cours du temps t (axe des abscisses). La figure 10 montre trois courbes : une première courbe *C_{w}* représentative du comportement de la résistance des conducteurs chauffants 23, 25 seuls, une deuxième courbe *Cₜ* représentative du comportement de la thermistance CTP seule, et une troisième courbe *C*_{*(w*+*t)*} représentative du comportement d'une résistance globale du dispositif de chauffe où la thermistance CTP est connectée aux conducteurs chauffants 23, 25 .

On peut voir sur cette figure que la première courbe *C_{w}* présente une partie croissante, puis une partie constante. La partie croissante de la première courbe *C_{w}* correspond à la montée en température des conducteurs chauffants 23, 25. La partie constante de la résistance correspond à la valeur stabilisée de la température des conducteurs chauffants 23, 25. Sur cet exemple la résistance des conducteurs chauffants 23, 25 est environ 4,7 à la mise en fonctionnement et la valeur constante de résistance est 5,0. L'amplitude de variation de la résistance des conducteurs chauffants 23, 25 est de 0,3.

On dit que la résistance des conducteurs chauffants 23, 25 présente une dérive thermique. Les caractéristiques de cette dérive thermique (profil de la courbe représentant la résistance en fonction de la température) dépendent du matériau de fabrication des conducteurs chauffants 23, 25, de la tension et du courant d'alimentation.

Etant donnée que la chaleur dissipée dépend de la résistance des conducteurs chauffants 23, 25, on comprend que la chaleur dissipée n'est pas stable vis-à-vis de la température. Le dimensionnement thermique de la conduite chauffante principale 7 est donc délicat.

De plus, la variation de résistance des conducteurs chauffants 23, 25 provoque une variation du courant circulant dans le circuit électrique du dispositif de chauffe.

Généralement, la résistance d'une thermistance CTP augmente fortement avec la température dans une plage de température limitée, mais diminue en dehors de cette zone. La figure 11 représente la variation de la résistance de la thermistance CTP en fonction de la température. Trois zones de résistances sont distinguables sur cette figure : une première zone *Z₁* à basses températures, une deuxième zone *Z₂* autour de la deuxième température seuil *Tₛ₂*, et une troisième zone *Z₃* à hautes températures, au-delà de la deuxième température seuil *Tₛ₂.*

Selon une variante, le comportement de la thermistance CTP dans la première zone *Z₁* est utilisé pour améliorer la stabilité du courant qui parcourt les conducteurs chauffants 23, 25. Le comportement de la thermistance CTP dans la première zone *Z₁* est aussi représenté par la deuxième courbe *Cₜ* de la figure 10. On peut voir sur la figure 10 que la résistance des conducteurs chauffants 23, 25 et la résistance de la thermistance CTP sont sensiblement opposé. En effet la résistance de la thermistance CTP diminue de 5,0 à 4,8 la résistance de la thermistance CTP est donc proche de celle des conducteurs chauffants 23, 25. La résistance de la CTP ainsi que les limites des différentes zones *Z₁, Z₂, Z₃* peuvent être déterminées par exemple par les matériaux utilisés pour fabriquer la thermistance CTP.

La troisième courbe *C*_{*(w*+*t)*} montre que l'assemblage de la thermistance CTP aux conducteurs chauffants 23, 25 permet d'obtenir une résistance stable quelle que soit la durée de fonctionnement et la température. Une légère variation est observable au début de la courbe, correspondant à la montée en température des conducteurs chauffants 23, 25. Puis la résistance se stabilise à une valeur constante. L'amplitude de variation de résistance de l'assemblage thermistance CTP et conducteurs chauffants 23, 25 est environ 0,04 , soit à peu près sept fois moins que sans régulateur de courant 35.

On comprend donc que l'utilisation d'un régulateur de courant 35 comprenant une thermistance CTP améliore la stabilité du courant par rapport à la température. En stabilisant la résistance du dispositif de chauffe, on stabilise la chaleur dégagée. Par conséquent, la thermistance CTP facilite le dimensionnement thermique du dispositif de chauffe 23.

Selon une autre variante, le comportement de la thermistance CTP dans la deuxième zone *Z₂* (figure 11) permet d'interrompre la circulation du courant dans les conducteurs chauffants 23, 25.

En effet, la thermistance CTP présente une deuxième température seuil *Tₛ₂* au-delà de laquelle sa résistance augmente fortement. Sur l'exemple de la figure 11, la résistance de la thermistance CTP augmente de 10,0 à environ 10000,0 sur une plage de température allant de 70°C à 100°C. La thermistance CTP n'est plus passante et le courant circulant dans les conducteurs chauffants 23, 25 tend alors vers une valeur nulle. Le régulateur de courant 35 comprenant une thermistance CTP agit donc comme un interrupteur. Quand le courant ne circule plus dans les conducteurs chauffants 23, 25, ceux-ci ne dégagent plus de chaleur et donc leur température diminue. Dès que la température est inférieure à la deuxième température seuil *Tₛ₂*, la résistance de la thermistance CTP est assez faible pour que la thermistance CTP redevienne passante. Le courant se remet donc à circuler dans les conducteurs chauffants 23, 25 qui se remettent à chauffer. Avantageusement, la deuxième température seuil *Tₛ₂* est inférieure à la température critique *T_{c}* des conducteurs chauffants 23, 25, par exemple la deuxième température seuil *Tₛ₂* est égale à 150°C.

Selon une autre variante, le comportement de la thermistance CTP dans la première zone *Z₁* et dans la deuxième zone *Z₂* permet de contrôler le courant circulant, d'une part en le stabilisant et d'autre part en l'interrompant en fonction de la température des conducteurs chauffants 23, 25.

La thermistance CTP peut être choisie en même temps que les conducteurs chauffants 23, 25 afin de déterminer la résistance globale du dispositif de chauffe 21.

Ce deuxième mode de réalisation permet de réguler l'amplitude des variations de température T dues aux changements de résistance des conducteurs chauffants 23, 25.

La thermistance est choisie en même temps que les conducteurs chauffants 23, 25 et que le raccord hydraulique 9.

Le régulateur thermique 35 selon le deuxième mode de réalisation permet donc d'augmenter la robustesse du dispositif de chauffe 21 par rapport à la température ambiante des conducteurs chauffants 23, 25 et à l'alimentation du circuit électrique.

Similairement au thermostat bilame, la thermistance CTP peut être fixée dans le logement 53 du raccord hydraulique 9, la chaleur qu'elle dégage permet alors de réchauffer le raccord hydraulique 9. La thermistance CTP peut être choisie en même temps que le raccord hydraulique 9 afin de s'assurer que l'espace pour la loger dans le raccord hydraulique 9 est suffisant.

Le procédé d'assemblage est identique à celui du thermostat bilame.

Selon une variante la thermistance CTP est fixée à la conduite chauffante principale 7 grâce à du ruban adhésif.

Selon un troisième mode de réalisation, le régulateur de courant 35 comprend un thermostat bilame et une thermistance CTP connectés de préférence en série aux conducteurs chauffants 23, 25. Le régulateur de courant 35 de courant selon le troisième mode de réalisation présente les aptitudes d'interrupteur et de stabilisateur décrites précédemment.

Le régulateur de courant 35 selon le troisième mode de réalisation peut aussi être situé dans le raccord hydraulique 9 afin de le réchauffer.

Le procédé d'assemblage comporte une étape supplémentaire lors de laquelle le thermostat bilame et la thermistance CTP sont connectés ensemble par des conducteurs électriques.

On comprend donc qu'un dispositif de chauffe 21 comprenant un régulateur de courant 35 contrôlant le courant circulant dans les conducteurs chauffants 23, 25 en fonction de la température d permet d'une part d'augmenter la robustesse des conducteurs chauffants 23, 25 vis-à-vis de la température, et d'autre part vis-à-vis de la tension d'alimentation des conducteurs chauffants 23, 25.

En effet, un régulateur de courant 35 comprenant un thermostat bilame agit comme un interrupteur et coupe l'alimentation du dispositif de chauffe 21 avant que la température *T* des conducteurs chauffants 23, 25 atteigne une valeur critique qui pourrait les endommager.

Un régulateur de courant 35 comprenant une thermistance CTP agit comme un stabilisateur de courant et comme un interrupteur de courant. La thermistance CTP permet de stabiliser la résistance du circuit du dispositif de chauffe 21, et ainsi de stabiliser la quantité de chaleur dissipée par les conducteurs chauffants 23, 25. Ceci présente l'avantage de faciliter le dimensionnement thermique du dispositif de chauffe 21. De plus, la thermistance agit aussi comme un interrupteur et coupe l'alimentation du dispositif de chauffe 21 avant que la température *T* des conducteurs chauffants 23, 25 atteigne une valeur critique qui pourrait les endommager.

Il est aussi possible d'associer un thermostat bilame et une thermistance CTP pour améliorer encore la robustesse du dispositif de chauffe 21.

Enfin, le régulateur de courant 35 peut être fixé dans le raccord hydraulique 9 du système de distribution de liquide lave-glace, permettant ainsi de réchauffer celui-ci grâce à sa chaleur dissipée.

## Revendications

1. Raccord hydraulique (9) de système de distribution de liquide lave-glace comportant un logement (53) et des gorges de passage (49, 51),
- les gorges de passage (49, 51) logeant des conducteurs chauffants (23, 25) et permettant d'insérer les conducteurs chauffants (23, 25) à l'intérieur du raccord hydraulique (9),
- **caractérisé en ce qu'**un régulateur de courant (35) est disposé dans le logement (53) du raccord hydraulique (9) et contrôle le courant circulant dans les conducteurs chauffants en fonction de la température desdits conducteurs chauffants (23, 25),
les conducteurs chauffants (23, 25) et le régulateur de courant (35) formant, au moins en partie, un dispositif de chauffe.

2. Raccord hydraulique (9) selon la revendication 1, **caractérisé en ce que** le régulateur du courant (35) est connecté en série aux conducteurs chauffants (23, 25) de façon à fermer un circuit électrique de chauffe.

3. Raccord hydraulique (9) selon la revendication 1 ou 2, **caractérisé en ce que** le régulateur du courant (35) comprend un interrupteur apte à ouvrir le circuit électrique de chauffe lorsque les conducteurs chauffants (23, 25) atteignent une température seuil (Tₛ₁, Tₛ₂).

4. Raccord hydraulique (9) selon l'une des revendications précédentes, **caractérisé en ce que** le régulateur du courant (35) comprend un thermostat bilame.

5. Raccord hydraulique (9) selon l'une des revendications précédentes, **caractérisé en ce que** le régulateur du courant (35) comprend un stabilisateur de courant dont la résistance augmente avec la température des conducteurs chauffants (23, 25).

6. Raccord hydraulique (9) selon la revendication 5, **caractérisé en ce que** le régulateur du courant (35) comprend une thermistance à coefficient de température positif, en particulier un fusible réarmable à coefficient de température positif.

7. Raccord hydraulique (9) selon la revendication 4, **caractérisé en ce qu'**il comporte une boucle de contrôle fermée (40) dans laquelle le régulateur de courant (35) contrôle la température des conducteurs chauffants (23, 25) en fonction d'une température mesurée des conducteurs chauffants (23, 25) et d'une valeur seuil.

8. Raccord hydraulique (9) selon l'une des revendications précédentes, **caractérisé en ce que** le régulateur du courant (35) est encapsulée dans une colle thermique favorisant la dissipation de sa chaleur.

9. Procédé d'assemblage d'un raccord hydraulique (9) selon l'une des revendications précédentes, **caractérisé en ce qu'**il comprend les étapes suivantes :
- on insère les conducteurs chauffants (23, 25) dans des gorges de passage (49, 51) du raccord hydraulique (9),
- on place le régulateur du courant (35) dans un logement (53) du raccord hydraulique (9),
- on coule la colle thermique (55) dans le logement (53) de façon à encapsuler le régulateur du courant (35).

10. Système de distribution de liquide lave-glace 1 de véhicule automobile, notamment pour balais d'essuie-glace, comportant un raccord hydraulique (9) selon l'une quelconque des revendications 1 à 8.

## Patentansprüche

1. Hydraulikanschluss (9) eines Ausgabesystems einer Scheibenwaschflüssigkeit, das eine Aufnahme (53) und Durchgangsrillen (49, 51) aufweist,
wobei die Durchgangsrillen (49, 51) Heizleiter (23, 25) aufnehmen und es ermöglichen, die Heizleiter (23, 25) ins Innere des Hydraulikanschlusses (9) einzufügen,
**dadurch gekennzeichnet, dass** ein Stromregler (35) in der Aufnahme (53) des Hydraulikanschlusses (9) angeordnet ist und den in den Heizleitern fließenden Strom abhängig von der Temperatur der Heizleiter (23, 25) steuert,
wobei die Heizleiter (23, 25) und der Stromregler (35) zumindest zum Teil eine Heizvorrichtung bilden.

2. Hydraulikanschluss (9) nach Anspruch 1, **dadurch gekennzeichnet, dass** der Stromregler (35) mit den Heizleitern (23, 25) in Reihe geschaltet ist, um einen elektrischen Heizkreislauf zu bilden.

3. Hydraulikanschluss (9) nach Anspruch 1 oder 2, **dadurch gekennzeichnet, dass** der Stromregler (35) einen Unterbrecher enthält, der den elektrischen Heizkreislauf öffnen kann, wenn die Heizleiter (23, 25) eine Schwellentemperatur (Tₛ₁, Tₛ₂) erreichen.

4. Hydraulikanschluss (9) nach einem der vorhergehenden Ansprüche, **dadurch gekennzeichnet, dass** der Stromregler (35) ein Bimetall-Thermostat enthält.

5. Hydraulikanschluss (9) nach einem der vorhergehenden Ansprüche, **dadurch gekennzeichnet, dass** der Stromregler (35) einen Stromstabilisator enthält, dessen Widerstand mit der Temperatur der Heizleiter (23, 25) zunimmt.

6. Hydraulikanschluss (9) nach Anspruch 5, **dadurch gekennzeichnet, dass** der Stromregler (35) einen Thermistor mit positivem Temperaturkoeffizienten enthält, insbesondere eine rückstellbare Sicherung mit positivem Temperaturkoeffizienten.

7. Hydraulikanschluss (9) nach Anspruch 4, **dadurch gekennzeichnet, dass** er eine geschlossene Steuerschleife (40) aufweist, in der der Stromregler (35) die Temperatur der Heizleiter (23, 25) abhängig von einer gemessenen Temperatur der Heizleiter (23, 25) und von einem Schwellwert steuert.

8. Hydraulikanschluss (9) nach einem der vorhergehenden Ansprüche, **dadurch gekennzeichnet, dass** der Stromregler (35) in einen Wärmekleber eingekapselt ist, der die Abstrahlung seiner Wärme begünstigt.

9. Verfahren zum Zusammenbau eines Hydraulikanschlusses (9) nach einem der vorhergehenden Ansprüche, **dadurch gekennzeichnet, dass** es die folgenden Schritte enthält:
- die Heizleiter (23, 25) werden in Durchgangsrillen (49, 51) des Hydraulikanschlusses (9) eingefügt,
- der Stromregler (35) wird in einer Aufnahme (53) des Hydraulikanschlusses (9) angeordnet,
- der Wärmekleber (55) wird in die Aufnahme (53) gegossen, um den Stromregler (35) einzukapseln.

10. System zur Verteilung einer Kraftfahrzeug-Scheibenwaschflüssigkeit (1), insbesondere für Scheibenwischerblätter, das einen Hydraulikanschluss (9) nach einem der Ansprüche 1 bis 8 aufweist.

## Claims

1. A hydraulic coupling (9) of a system for distributing windshield washer fluid comprising a housing (53) and passage grooves (49, 51), the passage grooves (49, 51) housing heating conductors (23, 25) and making it possible to put the heating conductors (23, 25) inside the hydraulic coupling (9),
**characterized in that** a current regulator (35) is placed in the housing (53) of the hydraulic coupling (9) and controls the current flowing in the heating conductors as a function of the temperature of said heating conductors (23, 25),
the heating conductors (23, 25) and the current regulator (35) forming, at least in part, a heating device.

2. The hydraulic coupling (9) as claimed in claim 1, **characterized in that** the current regulator (35) is connected in series to the heating conductors (23, 25) so as to close a heating electric circuit.

3. The hydraulic coupling (9) as claimed in claim 1 or 2, **characterized in that** the current regulator (35) comprises a switch capable of opening the heating electric circuit when the heating conductors (23, 25) reach a threshold temperature (*T*_{*s*1}*, T*_{*s*2}).

4. The hydraulic coupling (9) as claimed in one of the preceding claims, **characterized in that** the current regulator (35) comprises a bimetal thermostat.

5. The hydraulic coupling (9)) as claimed in one of the preceding claims, **characterized in that** the current regulator (35) comprises a current stabilizer, the resistance of which increases with the temperature of the heating conductors (23, 25).

6. The hydraulic coupling (9) as claimed in claim 5, **characterized in that** the current regulator (35) comprises a positive temperature coefficient thermistor, in particular a positive temperature coefficient resettable fuse.

7. The hydraulic coupling (9) as claimed in claim 4, **characterized in that** it includes a closed control loop (40) in which the current regulator (35) controls the temperature of the heating conductors (23, 25) as a function of a measured temperature of the heating conductors (23, 25) and of a threshold value.

8. The hydraulic coupling (9) as claimed in one of the preceding claims, **characterized in that** the current regulator (35) is encapsulated in a thermal adhesive promoting the dissipation of the heat thereof.

9. A method for assembling a heating device (21) as claimed in one of the preceding claims, **characterized in that** it comprises the following steps:
- the heating conductors (23, 25) are put into passage grooves (49, 51) of the hydraulic coupling (9),
- the current regulator (35) is positioned in a housing (53) of the hydraulic coupling (9),
- the thermal adhesive (55) is poured into the housing (53) so as to encapsulate the current regulator (35).

10. A system for distributing windshield washer fluid 1 of a motor vehicle, particularly for windshield wiper blades, including a hydraulic coupling (9) as claimed in any one of claims 1-8.
